# FASCICULE DE BREVET EUROPEEN

(11) **EP 3 019 807 B1**
(45) Date de publication et mention de la délivrance du brevet: **17.01.2018**
(21) Numéro de dépôt: 14749882.8
(22) Date de dépôt: 20.06.2014
(51) Int. Cl.: F28F 3/12, F28F 3/02

(54) **DISPOSITIF D'ÉCHANGE THERMIQUE ET PROCÉDÉ DE FABRICATION D'UN TEL DISPOSITIF**
WÄRMETAUSCHVORRICHTUNG UND VERFAHREN ZUR HERSTELLUNG SOLCH EINER VORRICHTUNG
HEAT EXCHANGE DEVICE AND METHOD FOR MAKING SUCH A DEVICE

(30) Priorité: 08.07.2013 FR 1356697
(43) Date de publication de la demande: 18.05.2016
(73) Titulaire: Liebherr-Aerospace Toulouse SAS, 31200 Toulouse (FR)
(72) Inventeur: PELISSIER, Bertrand, F-31140 Saint Alban (FR)
(74) Mandataire: Cabinet BARRE LAFORGUE & associés
(86) Numéro de dépôt international: PCT/FR2014/051545
(87) Numéro de publication internationale: WO 2015/004359

(56) Documents cités:
- DE-A1- 1 451 219
- FR-A- 1 189 606
- FR-A1- 2 778 973
- GB-A- 1 109 697
- US-A- 1 712 892
- US-A1- 2001 045 276
- US-A1- 2005 115 700

## Description

L'invention concerne un dispositif d'échange thermique, notamment un échangeur thermique pour un véhicule atmosphérique, et plus particulièrement un échangeur thermique apte à être intégré sur la carrosserie d'un tel véhicule.

L'invention concerne en particulier un dispositif d'échange thermique de surface et de faible épaisseur, pouvant être cintré et fixé à un panneau de fuselage d'un aéronef.

Un tel dispositif d'échange thermique trouve ses applications dans le domaine de la construction aéronautique dans lequel sont plus particulièrement recherchées des solutions d'échange thermique qui sont efficaces et qui ne perturbent pas l'aérodynamique de l'aéronef, en particulier d'un avion ou d'un hélicoptère. Cependant, un tel dispositif d'échange thermique trouve aussi ses applications dans la construction et l'équipement d'autres véhicules atmosphériques, en particulier de véhicules de transport par voie ferrée, par voie routière ou par voie maritime.

On connaît de nombreux dispositifs d'échange thermique de surface pour aéronefs mais qui ne sont pas adaptés pour pouvoir être en contact direct avec l'air froid extérieur de l'aéronef et présentent donc une efficacité d'échange thermique qui est limitée. En effet, les échanges thermiques des véhicules atmosphériques sont rarement disposés en contact direct avec l'extérieur à cause de la difficulté à les mettre en forme selon une forme aérodynamique, notamment selon une forme cintrée.

Ils sont aussi rarement placés directement à l'extérieur à cause de leur fragilité. En effet, la différence de pression entre la face intérieure de l'échangeur, située du côté de l'aéronef, et la face extérieure est très importante. La face extérieure subit notamment une dépression importante qui peut conduire à des déformations de cette face et donc à un écoulement modifié dans l'échangeur. De telles déformations peuvent donc conduire à des pertes d'efficacité importantes de l'échangeur.

Or dans de nombreux échangeurs, le fluide suit des chemins en aller-retour afin d'optimiser la surface d'échange thermique. Cependant, les zones dans lesquelles le fluide change de direction sont particulièrement difficile à concevoir pour obtenir des dispositifs à la fois résistants aux différences de pression et pouvant être cintrés aux formes aérodynamiques d'une carrosserie.

Ainsi JP H03025096 propose un échangeur de surface cintré selon une forme cylindrique et dans lequel un fluide circule en « U » entre une zone amont et une zone aval. L'échangeur comprend des guide-flux présentant des tronçons crénelés décalés les uns des autres, disposés respectivement dans la zone amont et dans la zone aval. En revanche, le passage de retour entre la zone amont et la zone aval est entièrement ouvert et libre de toute structure. L'échangeur est donc fragilisé dans cette zone dans laquelle il est susceptible de se déformer pour les raisons précédemment citées. En outre, cette zone libre de l'échangeur présente une rigidité en flexion très distincte de celle des zones amont et aval dans lesquelles sont disposés des guide-flux.

Ces échangeurs ne sont donc pas adaptés pour être cintrés selon des formes courbes complexes de carrosserie et ne peuvent donc pas y être intégrés.

L'invention vise donc à pallier ces inconvénients.

L'invention vise à proposer un dispositif d'échange thermique, aussi appelé échangeur de peau, adapté pour pouvoir être monté avec une face externe en contact direct avec un milieu extérieur d'un véhicule atmosphérique, notamment d'un aéronef.

L'invention vise notamment un dispositif d'échange thermique pouvant être installé à la surface d'une carrosserie de véhicule atmosphérique, notamment à la surface d'un fuselage d'aéronef sans impacter la traînée du véhicule -notamment de l'aéronef.

L'invention vise plus particulièrement un dispositif d'échange thermique présentant une surface extérieure gauche complexe pour pouvoir être intégré sur tout type de carrosserie et en toute zone d'une carrosserie.

Or dans de nombreux échangeurs, le fluide suit des chemins en aller-retour afin d'optimiser la surface d'échange thermique. Cependant, les zones dans lesquelles le fluide change de direction sont particulièrement difficile à concevoir pour obtenir des dispositifs à la fois résistants aux différences de pression et pouvant être cintrés aux formes aérodynamiques d'une carrosserie.

Ainsi JP H03025096 propose un échangeur de surface cintré selon une forme cylindrique et dans lequel un fluide circule en « U » entre une zone amont et une zone aval. L'échangeur comprend des guide-flux présentant des tronçons crénelés décalés les uns des autres, disposés respectivement dans la zone amont et dans la zone aval. En revanche, le passage de retour entre la zone amont et la zone aval est entièrement ouvert et libre de toute structure. L'échangeur est donc fragilisé dans cette zone dans laquelle il est susceptible de se déformer pour les raisons précédemment citées. En outre, cette zone libre de l'échangeur présente une rigidité en flexion très distincte de celle des zones amont et aval dans lesquelles sont disposés des guide-flux.

FR2778973 décrit un circulateur cintré pour fluide destiné à réaliser un échange thermique. US2005115700 décrit un échangeur de chaleur comprenant une pluralité de guide-flux brasés. DE1451219 décrit un panneau de radiateur plat présentant une pluralité de canaux de conduction d'un fluide caloporteur, entre lesquels des parois de séparation ajourées sont disposées. US1712892 décrit un appareil d'échange de chaleur comprenant deux conduits de circulation de fluide disposés chacun en serpentin en parallèle l'un de l'autre et engagés alternativement l'un dans l'autre. US2001045276 décrit un appareil de transfert de chaleur présentant un passage en zigzag.

Ces échangeurs ne sont donc pas adaptés pour être cintrés selon des formes courbes complexes de carrosserie et ne peuvent donc pas y être intégrés.

L'invention vise donc à pallier ces inconvénients.

L'invention vise à proposer un dispositif d'échange thermique, aussi appelé échangeur de peau, adapté pour pouvoir être monté avec une face externe en contact direct avec un milieu extérieur d'un véhicule atmosphérique, notamment d'un aéronef.

L'invention vise notamment un dispositif d'échange thermique pouvant être installé à la surface d'une carrosserie de véhicule atmosphérique, notamment à la surface d'un fuselage d'aéronef sans impacter la traînée du véhicule -notamment de l'aéronef.

L'invention vise plus particulièrement un dispositif d'échange thermique présentant une surface extérieure gauche complexe pour pouvoir être intégré sur tout type de carrosserie et en toute zone d'une carrosserie.

L'invention vise aussi un dispositif d'échange thermique de faible épaisseur.

L'invention vise un dispositif d'échange thermique de grande efficacité.

L'invention vise également à proposer un tel dispositif qui soit résistant aux conditions -notamment de pression et de température à haute altitude et à hautes vitesses- auxquelles une carrosserie de véhicule atmosphérique, telle qu'un fuselage d'aéronef, est soumise, notamment en vol.

L'invention vise par ailleurs un dispositif dans lequel le nombre de pièces est réduit.

L'invention vise en outre un dispositif d'échange thermique dont l'assemblage et le cintrage sont simplifiés.

L'invention vise aussi un dispositif d'échange thermique qui est accessible de l'extérieur du véhicule et dont la maintenance est ainsi facilitée.

L'invention concerne donc un dispositif d'échange thermique selon la revendication 1.

Avantageusement et selon l'invention, la plaque interne et la plaque externe sont étanches au fluide caloporteur.

De plus, avantageusement et selon l'invention, la plaque externe est adaptée pour être au contact d'un milieu extérieur d'un véhicule. Notamment la plaque extérieure est adaptée pour pouvoir être exposée à la haute atmosphère et à des écoulements d'air à des vitesses de l'ordre du Mach. Plus particulièrement, la plaque externe présente une face, dite face extérieure, adaptée pour être au contact d'un milieu extérieur d'un véhicule.

De plus, la plaque externe présente une face, dite face intérieure, opposée à la face extérieure, disposée en regard de la plaque interne, adaptée pour pouvoir être en contact direct avec un fluide caloporteur. La plaque externe est adaptée pour permettre une dissipation de chaleur d'un fluide caloporteur au contact de ladite face intérieure vers un fluide d'un milieu extérieur (au contact de ladite face extérieure) au véhicule. Ainsi, la plaque externe est une surface d'échange thermique direct entre un fluide caloporteur situé dans l'enceinte et ledit milieu extérieur au véhicule. L'échange thermique entre fluide caloporteur et milieu extérieur est ainsi optimum.

La plaque externe est en matériau(x) thermo-conducteur(x), et présente notamment une conductivité thermique moyenne supérieure à 10 W.m⁻¹.K⁻¹ à 20°C, notamment supérieure à 20 W.m⁻¹.K⁻¹ à 20°C.

La plaque interne et la plaque externe sont disposées à une distance, dite distance interpariétale, non-nulle l'une de l'autre. Cet espace forme l'enceinte de circulation d'un fluide caloporteur.

Un dispositif selon l'invention présente avantageusement une épaisseur très inférieure à sa largeur et à sa longueur. Plus particulièrement, la distance interpariétale dudit dispositif additionnée des épaisseurs des plaques externe et interne est inférieure à 100 fois sa largeur et sa longueur.

Dans un dispositif selon l'invention le fluide caloporteur peut être sous forme liquide ou gazeuse.

L'enceinte présente une périphérie fermée étanche au fluide caloporteur. À cet effet, le cloisonnage d'un dispositif selon l'invention comprend en outre une paroi périphérique interposée entre la plaque interne et la plaque externe, délimitant l'enceinte et la fermant de façon étanche au fluide caloporteur.

Les composants d'un dispositif selon l'invention devant être étanches audit fluide caloporteur, notamment les plaques externe et interne, ladite paroi périphérique, et la cloison étanche sont choisies en conséquence dans un matériau approprié.

L'enceinte présente pour uniques ouvertures une ou plusieurs entrée(s) et une ou plusieurs sortie(s) de fluide caloporteur. Plus particulièrement, l'enceinte présente avantageusement une seule entrée de fluide et une seule sortie.

Par ailleurs, avantageusement et selon l'invention, chaque entrée de fluide est une ouverture ménagée dans la plaque interne. De même, chaque sortie de fluide est avantageusement une ouverture ménagée dans la plaque interne. Ainsi, la plaque externe est lisse et ne présente pas d'éléments en saillie qui pourraient nuire à l'aérodynamique d'un aéronef.

L'enceinte abrite un circuit hydraulique de circulation du fluide caloporteur entre au moins une entrée et au moins une sortie. Les termes « amont » et « aval » sont définis dans ce circuit hydraulique par rapport au sens normal de circulation de fluide caloporteur d'une entrée de fluide vers une sortie de fluide.

L'entrée de fluide débouche en amont de la zone amont, c'est-à-dire dans une portion amont de la zone amont ou dans une portion de circuit hydraulique située à l'amont de la zone amont.

De même, la sortie de fluide débouche en aval de la zone aval, c'est-à-dire dans une portion aval de la zone aval ou dans une portion de circuit hydraulique située à l'aval de la zone aval.

La zone aval est donc, dans le circuit hydraulique, en aval de la zone amont.

La zone amont est au moins en partie séparée de la zone aval par une cloison étanche. Notamment, la portion amont de la zone amont est étanchement séparée de la portion aval de la zone aval par une (ou plusieurs) cloison(s) étanche(s). Ainsi, le fluide caloporteur ne peut circuler de la zone amont vers la zone aval qu'entre une portion aval de la zone amont et une portion amont de la zone aval.

Chaque cloison étanche s'étend selon une direction, dite direction principale. Chaque cloison étanche est disposée dans l'enceinte pour forcer la circulation de fluide alternativement dans un sens puis dans un sens opposé selon la direction principale.

Le guide amont et le guide aval présentent des parois de guidage selon une direction parallèle à ladite direction principale. Les zones amont et aval sont donc adaptées pour que le fluide caloporteur y circule globalement selon la direction principale.

De plus, l'entrée de fluide est disposée à l'amont de la zone amont. La sortie de fluide est disposée à l'aval de la zone aval. Or, le seul passage, dit passage de retour, de fluide de la zone amont vers la zone aval est à distance de l'entrée de fluide et de la sortie de fluide (en aval de la zone amont et en amont de la zone aval). Ainsi, le dispositif d'échange est adapté pour qu'un fluide caloporteur contourne au moins une cloison étanche entre l'entrée de fluide et la sortie de fluide.

Le circuit hydraulique forme donc au moins une circulation en aller puis retour selon une même direction, mais selon des sens opposés. Le fluide caloporteur suit donc un circuit hydraulique dans l'enceinte en forme générale de « U ». Rien n'empêche, conformément à l'invention, que le fluide suive plusieurs portions successives en « U » dans un circuit hydraulique conformé dans l'enceinte de façon à former une circulation en « S » ou à serpentins. L'enceinte est, dans ce cas, avantageusement équipée d'une pluralité de cloisons séparatrices comprenant chacune une cloison étanche et une cloison à claire-voie.

La cloison à claire-voie est disposée dans un passage de retour du fluide de la zone amont vers la zone aval. Elle permet un passage du fluide, tout en assurant le maintien de la plaque externe par rapport à la plaque interne (à la distance interpariétale notamment). En outre, la cloison à claire-voie permet aussi que l'échangeur présente une rigidité en flexion de même ordre de grandeur au niveau du passage de retour et au niveau de la cloison étanche. La cloison à claire-voie est disposée dans le prolongement de ladite cloison étanche. Ainsi, l'enceinte est séparée entre au moins une zone amont et une zone aval par au moins une cloison séparatrice comprenant une cloison étanche en une seule pièce ou en plusieurs éléments de cloison étanche mis bout à bout, et une cloison à claire-voie en une seule pièce ou en plusieurs éléments de cloison à claire-voie mis bout à bout, ladite cloison à claire-voie étant disposée dans le prolongement de la cloison étanche.

De plus, la cloison étanche et la cloison à claire-voie sont avantageusement sensiblement rectilignes selon ladite direction principale.

Par ailleurs, le cloisonnage est solidaire mécaniquement de la plaque interne et de la plaque externe de façon à pouvoir assurer un maintien au moins local de la plaque externe à un écartement fixe de la plaque interne, notamment de façon à maintenir ladite distance interpariétale entre la surface intérieure de la plaque externe et une surface intérieure de la plaque interne.

Plus particulièrement, avantageusement et selon l'invention, la cloison étanche et la cloison à claire-voie sont fixées rigidement et continument -notamment sont brasées- sur la plaque externe et sur la plaque interne.

Ainsi, le cloisonnage selon l'invention permet d'obtenir un dispositif d'échange thermique dont la rigidité en flexion est particulièrement homogène -notamment sur toute sa largeur en vue d'un cintrage autour d'une direction parallèle à la direction de mesure, et notamment sur toute sa longueur en vue d'un cintrage autour d'une direction orthogonale à la direction de mesure.

Le cloisonnage selon l'invention permet aussi d'obtenir un dispositif d'échange thermique particulièrement résistant mécaniquement, notamment particulièrement résistant aux différences de pressions entre la surface intérieure de la plaque externe (à la pression du fluide caloporteur dans l'enceinte) et la surface extérieure de la plaque externe (à la pression d'un milieu extérieur d'un véhicule sur lequel ledit dispositif d'échange thermique est installé).

Dans un dispositif conforme à l'invention, toute section transversale de la cloison à claire-voie présente avantageusement au moins une surface solidaire mécaniquement avec l'une des plaques externe ou interne. Au contraire de passages qui auraient été créés par l'interruption totale d'une cloison, une cloison à claire-voie selon l'invention n'est pas interrompue au niveau d'un orifice de circulation du fluide caloporteur. En outre, la portion ininterrompue de cloison au niveau d'un orifice de circulation est en contact de surface et solidaire mécaniquement d'au moins l'une des plaques externe ou interne.

Un cloisonnage comprenant des cloisons à claire-voie selon l'invention permet donc d'assurer une excellente rigidité du dispositif d'échange, une homogénéité de cette rigidité sur toute la surface du dispositif d'échange, et un maintien de la plaque externe par rapport à la plaque interne.

Un cloisonnage selon l'invention, notamment comprenant des cloisons à claire-voie, permet aussi d'obtenir un dispositif d'échange thermique dont la résistance à la flexion est homogène, de sorte que son cintrage est facilité.

Or l'homogénéité de la rigidité en flexion du dispositif d'échange sur toute sa surface permet de le cintrer au choix selon une direction (par exemple autour d'une direction parallèle à la direction principale) ou selon une autre. Plus particulièrement, cette homogénéité permet de donner à l'échangeur des formes de surface courbes complexes et/ou gauches, de façon à pouvoir l'intégrer dans toute zone d'une carrosserie, y compris en remplacement de panneaux de carrosserie présentant une surface courbe complexe ou gauche. Ainsi, un échangeur selon l'invention peut être intégré dans toute zone d'une carrosserie de véhicule, notamment dans toute zone d'un fuselage d'aéronef (par exemple dans le nez, sur un moteur, sur une aile.

La cloison à claire-voie peut-être formée d'une plaque à perforations, grillages, treillis, échelles, peignes,...

Plus particulièrement, avantageusement et selon l'invention, la cloison à claire-voie présente au moins une face entièrement en contact de surface avec et fixée rigidement à l'une ou l'autre de la plaque externe ou de la plaque interne.

Avantageusement et selon l'invention ladite cloison à claire-voie présente au moins un orifice de circulation de fluide caloporteur en forme d'arche, dite arche de circulation.

Chaque arche de circulation est réalisée sur une même face (de ladite cloison à claire-voie) destinée à venir au contact de l'une des plaques externe ou interne. La cloison à claire-voie présente donc, sur cette face, des appuis, dits pieds d'arche, en contact de surface avec ladite plaque interne ou ladite plaque externe et fixés rigidement -notamment brasés- sur cette dernière. La face (de la cloison à claire-voie) opposée aux pieds d'arche est en contact avec la seconde des plaques interne ou externe et fixée rigidement -notamment brasée- à cette dernière.

Les pieds d'arche de la cloison à claire-voie sont de préférence en contact de surface et solidaires mécaniquement de la plaque externe de sorte que lesdites arches sont ouvertes le long de la plaque externe, maximisant ainsi la surface mouillée de ladite plaque externe par le fluide caloporteur. La face de la cloison à claire-voie, opposée auxdits pieds d'arches est en contact de surface et solidaire mécaniquement de la plaque interne.

Rien n'empêche cependant, dans un dispositif conforme à l'invention, que la paroi à claire-voie présente des arches tant le long de la plaque externe que de la plaque interne, par exemple alternativement le long de la plaque interne et le long de la plaque externe. Elle présente alors de larges pieds d'arches en contact de surface et solidaire mécaniquement de la plaque interne et de larges pieds d'arches en contact de surface et solidaire mécaniquement de la plaque externe.

En outre, la plaque interne étant à une distance, dite distance interpariétale de la plaque externe, la portée de chaque arche de circulation est inférieure au triple de la distance interpariétale. Plus particulièrement, la portée de chaque arche de circulation est avantageusement inférieure au double de la distance interpariétale. Ainsi, la distance entre deux pieds d'arche successifs est faible, de sorte que la cloison à claire-voie assure un bon maintien de la plaque externe par rapport à la plaque interne. L'invention permet ainsi d'obtenir un dispositif d'échange particulièrement résistant et de rigidité en flexion homogène sur l'ensemble de sa surface.

La cloison à claire-voie comprend avantageusement une pluralité d'orifices de circulation -notamment une pluralité d'arches de circulation-. La cloison à claire-voie comprend donc aussi une pluralité (au moins trois) de pieds d'arche permettant d'assurer un maintien de la plaque externe par rapport à la plaque interne à intervalles de distance réguliers.

De plus, avantageusement et selon l'invention, la cloison à claire-voie présente une section totale de passage de fluide caloporteur adapté pour qu'au moins 50 % du fluide caloporteur passant de la zone amont à la zone aval passe à travers ladite cloison à claire-voie. Plus particulièrement, la cloison à claire-voie présente une section totale de passage de fluide caloporteur adapté pour qu'au moins 75 % du fluide caloporteur passant de la zone amont à la zone aval passe à travers ladite cloison à claire-voie. Notamment, le nombre et la section de chaque orifice de circulation est adapté pour obtenir un tel résultat.

Dans certains modes de réalisations de l'invention, le seul passage de fluide caloporteur entre zone amont et zone aval est à travers la cloison à claire-voie, de sorte que 100 % du fluide caloporteur traverse la cloison à claire-voie (par ses orifices de circulation) pour passer d'une zone amont à une zone aval.

Par ailleurs, avantageusement et selon l'invention, chaque guide-flux présente des contacts surfaciques avec la plaque interne et avec la plaque externe au niveau desquels lesdits guide-flux sont solidarisés mécaniquement à la plaque interne et à la plaque externe.

Chaque guide-flux présente une forme ondulée, la hauteur des ondulations étant sensiblement égale à la distance interpariétale. Ainsi, chaque guide-flux présente une pluralité de zones externes et de zones internes en contact de surface avec la face intérieure respectivement de la plaque externe et de la plaque interne. Chaque guide-flux forme ainsi une pluralité de parois de guidage délimitant au moins des portions de conduits de circulation du fluide caloporteur selon ladite direction principale.

Avantageusement et selon l'invention, le guide amont (respectivement le guide aval) présente une pluralité d'ondulations dans la largeur de la zone amont (respectivement de la zone aval) de façon à former une pluralité de canaux de circulation de fluide caloporteur dans chaque zone (amont et aval) de l'enceinte de circulation.

Chaque guide-flux présente avantageusement un profil ondulé régulièrement selon une forme périodique, par exemple du type sinusoïdal ou crénelé.

Avantageusement chaque guide-flux est solidarisé avec la plaque externe et avec la plaque interne par une pluralité de contacts surfaciques. Plus particulièrement, les zones (externes et internes) de contact de chaque guide-flux sont avantageusement brasées aux faces intérieures de la plaque externe et de la plaque interne.

En outre, dans un mode de réalisation avantageux de l'invention, chaque paroi de guidage de chaque guide-flux présente une longueur inférieure à la longueur totale dudit guide-flux.

Dans un mode de réalisation possible, chaque guide-flux comprend donc une pluralité de tronçons de guidage successifs selon ladite direction principale. Les parois de guidage de chaque tronçon de guidage sont avantageusement décalées selon une direction orthogonale à la direction principale par rapport au tronçon précédent et/ou par rapport au tronçon suivant selon ladite direction principale. Chaque tronçon présente une longueur (selon la direction principale) inférieure à la longueur totale dudit guide-flux.

Ainsi, dans ce mode de réalisation chaque zone de circulation (zone amont et zone aval) comprend une pluralité de tronçons comprenant chacun une pluralité de canaux de guidage parallèles selon la direction principale, lesdits tronçons se succédant les uns aux autres selon ladite direction principale et étant successivement décalés les uns par rapport aux autres latéralement selon une direction orthogonale à la direction principale. Un premier canal de guidage d'un tronçon d'un guide-flux débouche donc dans deux canaux de guidage adjacents d'un tronçon directement en aval de ce premier tronçon.

Chaque guide-flux est donc adapté pour créer une circulation en zigzag d'un fluide caloporteur, avec un écoulement globalement selon la direction principale. De cette manière le fluide caloporteur est au moins partiellement mélangé au fur et à mesure qu'il passe d'un tronçon de guidage à un autre. Cela permet d'améliorer l'homogénéité de l'échange thermique entre le fluide caloporteur et un milieu extérieur en évitant qu'une partie de fluide caloporteur suivant un premier chemin hydraulique ne se refroidisse beaucoup plus qu'une autre partie de fluide caloporteur suivant un deuxième chemin hydraulique distinct du premier chemin hydraulique.

Avantageusement et selon l'invention les tronçons de guidage d'un même guide-flux présentent des ondulations de mêmes formes et dimensions -notamment de même période- que les autres tronçons dudit guide-flux, et présente un décalage par rapport à au moins un tronçon situé directement en amont et/ou directement en aval.

Plus particulièrement, chaque tronçon de guidage est avantageusement décalé d'une demi-période latéralement selon une direction orthogonale aux parois de guidage (et donc orthogonalement par rapport à la direction principale), par rapport à un tronçon situé directement en amont ou situé directement en aval.

La période du profil de chaque guide-flux présente avantageusement une longueur du même ordre de grandeur que la distance interpariétale, notamment une longueur comprise entre 50 % et 200 % de la distance interpariétale.

De même, la longueur de chaque tronçon de guidage est du même ordre de grandeur que la distance interpariétale, notamment elle est comprise entre 50 % et 500 % de la distance interpariétale.

D'autres modes de réalisation des guide-flux peuvent être envisagés. Ainsi un dispositif selon l'invention peut comprendre des guide-flux formant une pluralité de canaux juxtaposés, par exemple droits ou en zigzag. Ces canaux présentent avantageusement des orifices de circulation de fluide entre eux, par exemple sous forme de persiennes, de perçages ou par des tronçons décalés comme présenté précédemment.

Les orifices de circulation de fluide entre deux canaux d'un guide-flux permettent de proposer un dispositif d'échange thermique selon l'invention dans lequel les guide-flux occupent un volume beaucoup plus important de l'enceinte. Notamment ils permettent de prolonger les guide-flux jusque dans une zone de l'enceinte normalement réservée au changement de direction du fluide caloporteur d'une portion amont vers une portion avale à travers un passage de retour. Ainsi, le dispositif d'échange thermique présente une excellente homogénéité de rigidité en flexion quelle que soit la direction de flexion (d'autant meilleure en combinaison avec une cloison à claire-voie disposée dans chaque passage de retour, dans le prolongement d'une cloison étanche).Cette homogénéité permet aussi de cintrer un tel dispositif d'échange selon des formes complexes et/ou gauches.

De plus, une telle disposition permet de réduire le nombre de pièces à disposer dans l'enceinte avant l'assemblage -notamment avant le brasage. Plus particulièrement, le nombre de guide-flux est avantageusement réduit.

Chaque guide-flux est avantageusement réalisé en une seule pièce, par emboutissage d'une feuille de matériau plastiquement déformable, par exemple par emboutissage d'une feuille d'un alliage d'aluminium.

Cependant, la zone amont et la zone aval peuvent comprendre chacune un (ou plusieurs) guide-flux, comprenant chacun une pluralité de tronçons successifs, disposés bout à bout selon la direction principale.

La largeur d'un guide-flux est avantageusement égale à la largeur de la zone amont (selon une direction orthogonale à la direction principale). Ainsi un guide-flux selon l'invention s'étend, en largeur, d'une paroi latérale de l'enceinte jusqu'à une cloison séparatrice d'une zone amont et d'une zone aval. Chaque guide-flux est ainsi bloqué en translation selon une direction orthogonale à la direction principale entre une étape d'assemblage et une étape de brasage d'un dispositif selon l'invention.

Avantageusement, un dispositif selon l'invention est aussi caractérisé en ce que :
- ladite zone amont comprend au moins un guide amont s'étendant au moins en partie en regard d'au moins un orifice de circulation d'une cloison à claire-voie séparant la zone amont de la zone aval,
- ladite zone aval comprend au moins un guide aval s'étendant au moins en partie en regard d'au moins un orifice de circulation d'une cloison à claire-voie séparant la zone amont de la zone aval.

Avantageusement et selon l'invention, la longueur de chaque guide-flux selon la direction principale est supérieure à longueur de cloison étanche disposée entre la zone amont et la zone aval.

Le décalage des parois de guidage entre deux tronçons successifs de chaque guide-flux permet au fluide caloporteur de zigzaguer entre les parois de guidage. Le fluide circule ainsi latéralement d'un canal de guidage à un canal de guidage adjacent, dans une zone de transition située dans une portion aval de la zone amont et dans une portion amont de la zone aval. Le fluide effectue un demi-tour dans cette zone de transition pour passer de la zone amont vers la zone aval, à travers un ou plusieurs orifices de circulation d'une cloison à claire-voie disposée dans le prolongement de ladite cloison étanche.

Par ailleurs, selon l'invention, le cloisonnage comprend en outre des cloisons séparant la zone amont et la zone aval d'une troisième zone de l'enceinte formant un canal, dit canal d'adduction, de circulation de fluide caloporteur entre la zone amont et la zone aval.

Ledit canal d'adduction est séparé de la zone amont par une cloison, dite cloison d'adduction amont, disposée à l'aval de la zone amont et présentant au moins un orifice de circulation de fluide caloporteur entre ladite zone amont et ledit canal d'adduction. Ledit canal d'adduction est séparé de la zone aval par une cloison, dite cloison d'adduction aval, disposée à l'amont de la zone aval et présentant au moins un orifice de circulation de fluide caloporteur entre ledit canal d'adduction et ladite zone aval.

Ledit canal d'adduction s'étend entre un bord de l'enceinte et lesdites cloisons d'adduction amont et aval. Ledit canal d'adduction est donc situé en aval de la zone amont et en amont de la zone aval.

Le canal d'adduction s'étend avantageusement sur toute la largeur de la zone amont et sur toute la largeur de la zone aval, de façon à pouvoir drainer un fluide caloporteur dans l'ensemble des canaux de guidage de la zone amont et à le redistribuer dans l'ensemble des canaux de guidage de la zone aval. Le canal d'adduction permet ainsi plus particulièrement de réduire la perte de charge le long de chemins hydrauliques plus longs. Le canal d'adduction permet donc de favoriser l'écoulement de fluide caloporteur sur toute la surface de l'échangeur, notamment dans des canaux de guidage éloignés de la cloison séparatrice centrale.

Ledit canal d'adduction est avantageusement exempt de guide-flux, de sorte qu'il constitue un canal de circulation libre du fluide caloporteur. Un tel canal d'adduction favorise la circulation de fluide caloporteur de la zone amont vers la zone aval. Un tel canal favorise notamment le transfert de fluide caloporteur de la zone amont vers la zone aval en cas d'obstruction des orifices de circulation de la cloison à claire-voie séparant la zone amont de la zone aval.

Ainsi, en fonctionnement, une portion du fluide caloporteur passe de la zone amont à la zone aval à travers la cloison à claire-voie, et une autre partie à travers la cloison d'adduction amont, le canal d'adduction, puis la cloison d'adduction aval.

Ledit canal d'adduction favorise la circulation de fluide caloporteur dans l'ensemble de la zone amont et de la zone aval, notamment dans les portions proches des bords latéraux des zones amont et aval.

Cependant, la largeur du canal d'adduction est très inférieure à sa longueur. La largeur du canal d'adduction est avantageusement 10 (dix) fois inférieure à sa longueur, et plus particulièrement sa largeur est avantageusement 50 (cinquante) fois inférieure à sa longueur. Ainsi, cette zone de l'échangeur est très peu fragilisée par ledit canal d'adduction et la rigidité en flexion du dispositif d'échange reste sensiblement homogène. En effet, les cloisons d'adduction amont et aval et la paroi périphérique sont solidaires mécaniquement de la plaque interne et de la plaque externe. Étant proches du fait de l'étroitesse du canal d'adduction, elles assurent, en combinaison, un maintien structurel du dispositif -notamment ces cloisons et paroi maintiennent la plaque externe à ladite distance interpariétale de la plaque interne.

La largeur du canal d'adduction dans un dispositif selon l'invention est avantageusement réduite grâce à la présence de la cloison à claire-voie qui autorise un important passage de fluide caloporteur directement de la zone amont vers la zone aval, sans transit par ledit canal d'adduction.

En outre, au moins un guide-flux de la zone amont s'étend selon la direction principale jusqu'à la cloison d'adduction amont. De même au moins un guide-flux de la zone aval s'étend selon la direction principale à partir la cloison d'adduction aval.

Dans un mode de réalisation possible selon l'invention, le cloisonnage comprend en outre une cloison, dite cloison de distribution, de séparation de la zone amont d'une quatrième zone de l'enceinte formant un canal, dit canal de distribution. Ladite cloison de distribution présente au moins un orifice de circulation de fluide caloporteur entre ledit canal de distribution et la zone amont.

Chaque entrée de fluide caloporteur est avantageusement adaptée pour pouvoir injecter le fluide caloporteur dans ledit canal de distribution. L'entrée est réalisée dans la paroi interne et débouche dans ledit canal de distribution.

Le canal de distribution s'étend avantageusement sur toute la largeur de la zone amont. De plus, ledit canal de distribution est avantageusement exempt de paroi de guidage. Il est notamment exempt de parois de guidage selon la direction principale de façon à permettre une bonne distribution d'un fluide caloporteur dans l'ensemble des canaux de guidage de la zone amont à partir d'une unique entrée de fluide caloporteur.

Ledit canal de distribution s'étend entre un bord de l'enceinte et ladite cloison de distribution. Ledit canal de distribution est donc situé en amont de la zone amont. Ledit canal de distribution s'étend d'un bord de l'enceinte à ladite cloison étanche.

Dans un mode de réalisation possible selon l'invention, le cloisonnage comprend en outre une cloison, dite cloison de collecte, de séparation de la zone aval d'une cinquième zone de l'enceinte formant un canal, dit canal de collecte. Ladite cloison de collecte présente au moins un orifice de circulation de fluide caloporteur entre la zone aval et ledit canal de collecte.

Chaque sortie de fluide caloporteur est avantageusement adaptée pour pouvoir extraire le fluide caloporteur hors dudit canal de collecte. La sortie est réalisée dans la paroi interne et débouche dans ledit canal de collecte.

Le canal de collecte s'étend avantageusement sur toute la largeur de la zone aval. De plus, ledit canal de collecte est avantageusement exempt de paroi de guidage. Il est notamment exempt de parois de guidage selon la direction principale de façon à permettre une bonne collecte d'un fluide caloporteur à partir de l'ensemble des canaux de guidage de la zone aval vers une unique sortie de fluide caloporteur.

Ledit canal de collecte s'étend entre un bord de l'enceinte et ladite cloison de collecte. Ledit canal de collecte est donc situé en aval de la zone aval. Ledit canal de collecte s'étend d'un bord de l'enceinte à ladite cloison étanche.

Les cloisons de distribution et de collecte ont aussi pour fonction d'assurer un maintien mécanique de la plaque externe par rapport à la plaque interne -notamment à ladite distance interpariétale l'une de l'autre. En effet, sans la présence des cloisons de distribution et de collecte, les canaux de distribution et de collecte pourraient être déformés sous l'effet de la différence de pression entre le fluide caloporteur dans l'enceinte et le milieu extérieur.

Les cloisons de distribution et de collecte selon l'invention permettent d'envisager des canaux de distribution et de collecte plus larges, donc présentant moins de pertes de charges, sans affaiblir la structure d'un dispositif d'échange selon l'invention.

Cependant, la largeur du canal de distribution et du canal de collecte est très inférieure à leur longueur. Les largeurs respectivement du canal de distribution et du canal de collecte sont avantageusement 10 (dix) fois inférieures à leurs longueurs respectives, et plus particulièrement leur largeur est avantageusement 50 (cinquante) fois inférieure à leur longueur. Ainsi, cette zone de l'échangeur est très peu fragilisée par lesdits canal de distribution et canal de collecte, et la rigidité en flexion du dispositif d'échange reste sensiblement homogène. En effet, les cloisons de distribution et de collecte et la paroi périphérique sont solidaires mécaniquement de la plaque interne et de la plaque externe. Étant proches du fait de l'étroitesse respectivement du canal de distribution et du canal de collecte, elles assurent, en combinaison, un maintien structurel du dispositif -notamment ces cloisons et paroi maintiennent la plaque externe à ladite distance interpariétale de la plaque interne.

Le canal de distribution et le canal de collecte sont avantageusement symétriques par rapport à la cloison étanche. De même, la cloison de distribution et la cloison de collecte sont avantageusement symétriques par rapport à la cloison étanche. Ainsi, la rigidité en flexion du dispositif d'échange est homogène de part et d'autre de la cloison étanche.

Bien qu'actuellement moins avantageux, rien n'empêche cependant d'envisager un dispositif présentant des canaux de distribution et de collecte de très faible largeur, et exempt de cloisons de distribution et de collecte. Rien n'empêche non plus d'envisager un dispositif exempt de canaux de distribution et de collecte et donc de cloisons de distribution et de collecte, dans lequel les guide-flux s'étendraient jusqu'à une extrémité du dispositif où le fluide caloporteur est injecté et collecté directement dans l'épaisseur du dispositif.

Lesdites cloisons d'adduction (amont et aval), de distribution et de collecte sont avantageusement formées d'éléments de cloison identiques aux éléments de cloison de la cloison à claire-voie. Avantageusement lesdites cloisons d'adduction (amont et aval), de distribution et de collecte présentent une pluralité d'orifices de circulation en forme d'arches.

Lesdites cloisons d'adduction (amont et aval), de distribution et de collecte sont fixées rigidement -notamment brasées- à la plaque interne et à la plaque externe de façon à pouvoir assurer un maintien de la plaque externe par rapport à la plaque interne.

Chaque guide-flux amont est bloqué en translation selon la direction principale par lesdites cloisons de distribution et d'adduction amont, notamment entre l'assemblage et le brasage d'un dispositif selon l'invention.

Chaque guide-flux aval est bloqué en translation selon la direction principale par lesdites cloisons d'adduction aval et de collecte, notamment entre une étape d'assemblage et une étape de brasage d'un dispositif selon l'invention.

La répartition des parois de guidage du fluide dans chaque zone de circulation n'est ainsi pas modifiée lors de l'assemblage d'un dispositif selon l'invention. Plus particulièrement, la géométrie interne et la répartition des éléments internes (notamment des parois de guidage du fluide) n'est pas modifiée lors d'étapes subséquentes de fabrication, par exemple lors d'un cintrage du dispositif.

En effet, un dispositif d'échange thermique selon l'invention, est avantageusement cintré.

Ainsi, un dispositif selon l'invention épouse et/ou reproduit la forme extérieure d'un fuselage, de façon à générer un minimum de traînée.

Un dispositif selon l'invention présente une forme cintrée autour d'un axe parallèle à ladite direction principale.

Alternativement ou en combinaison, un dispositif selon l'invention présente une forme cintrée autour d'un axe orthogonal à ladite direction principale.

Un dispositif conforme à l'invention présente avantageusement une forme cintrée autour de plusieurs axes distincts. Un dispositif selon l'invention est particulièrement adapté pour être mis en forme selon une forme gauche complexe. Cela permet d'envisager l'installation d'un dispositif selon l'invention dans toutes les zones de la carrosserie d'un véhicule, par exemple sur le nez d'un avion, sur ou dans des réacteurs, sur des dérives, ou encore sur une carrosserie de forme complexe telle que celle d'un hélicoptère.

Plus particulièrement, les cloisons à claire-voie, d'adduction amont et aval, de distribution et de collecte, ainsi que la cloison étanche sont adaptées pour que la résistance au cintrage (i.e. la rigidité en flexion) soit homogène autour d'un axe orthogonal à la direction principale. De même les cloisons à claire-voie, d'adduction amont et aval, de distribution et de collecte, ainsi que la cloison étanche sont adaptées pour que la résistance au cintrage soit homogène autour d'un axe parallèle à la direction principale.

En outre, disposer plusieurs guide-flux successivement dans chaque zone de circulation (amont et aval) facilite le cintrage d'un dispositif selon l'invention, notamment autour d'un axe orthogonal à la direction principale. De même, un guide-flux présentant plusieurs tronçons successifs décalés latéralement facilite un tel cintrage.

Les ondulations périodiques des guide-flux facilitent le cintrage d'un dispositif selon l'invention, notamment autour d'un axe parallèle à la direction principale.

Un dispositif selon l'invention est avantageusement cintré avec la plaque interne formant une face extérieure concave du dispositif et la plaque externe formant une face extérieure convexe du dispositif.

Rien n'empêche, cependant, dans certaines applications de l'invention, de prévoir un cintrage tel que la plaque interne forme une face extérieure concave du dispositif et que la plaque externe forme une face extérieure convexe du dispositif.

Enfin, dans des applications très spécifiques de l'invention, le cintrage du dispositif peut être tel que chaque face présente au moins une inversion de courbure entre une zone de surface concave et une zone de surface convexe. La plaque interne et la plaque externe présentent alors chacune au moins une portion de surface extérieure concave et une portion de surface extérieure convexe.

L'invention s'étend également à un procédé de fabrication d'un dispositif selon l'invention. Elle couvre aussi un procédé de fabrication selon la revendication 12.

Un tel procédé de fabrication permet d'obtenir un dispositif d'échange thermique conforme à l'invention, notamment un dispositif de faible épaisseur, particulièrement résistant et à haute efficacité d'échange thermique. Il permet notamment d'obtenir un dispositif d'échange thermique pouvant être monté à la surface d'une carrosserie de véhicule, notamment d'un fuselage d'aéronef.

C'est pourquoi, avantageusement, au cours d'un procédé selon l'invention, on cintre ledit dispositif d'échange thermique.

De plus, avantageusement et selon l'invention :
- une feuille de brasure est interposée entre la plaque interne d'une part et le cloisonnage et les guide-flux d'autre part,
- une feuille de brasure est interposée entre la plaque externe d'une part et le cloisonnage et les guide-flux d'autre part,
- une fois assemblé, ledit dispositif d'échange thermique subit simultanément un chauffage de brasage et un cintrage.

Plus particulièrement, le dispositif subit un cintrage sur une enclume par fluage sous l'effet du chauffage de brasage et de la gravité sous l'effet de son propre poids. La forme de l'enclume est choisie en fonction de la forme que l'on souhaite donner à l'échangeur selon l'invention, permettant ainsi d'obtenir un dispositif d'échange thermique conforme à l'invention selon une forme quelconque, y compris gauche et/ou complexe.

Chaque guide-flux (amont et aval), chaque cloison étanche, chaque cloison à claire-voie, chaque cloison d'adduction (amont et aval), chaque cloison de distribution, chaque cloison de collecte et la paroi périphérique sont solidarisés de la plaque interne et de la plaque externe par brasage.

L'invention concerne également un dispositif d'échange thermique et un procédé de fabrication d'un tel dispositif caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'un dispositif d'échange thermique dont des zones sont représentées en coupe par un plan médian avec des portions de chemins de circulation de fluide possibles, conformément à un mode de réalisation conforme à l'invention,

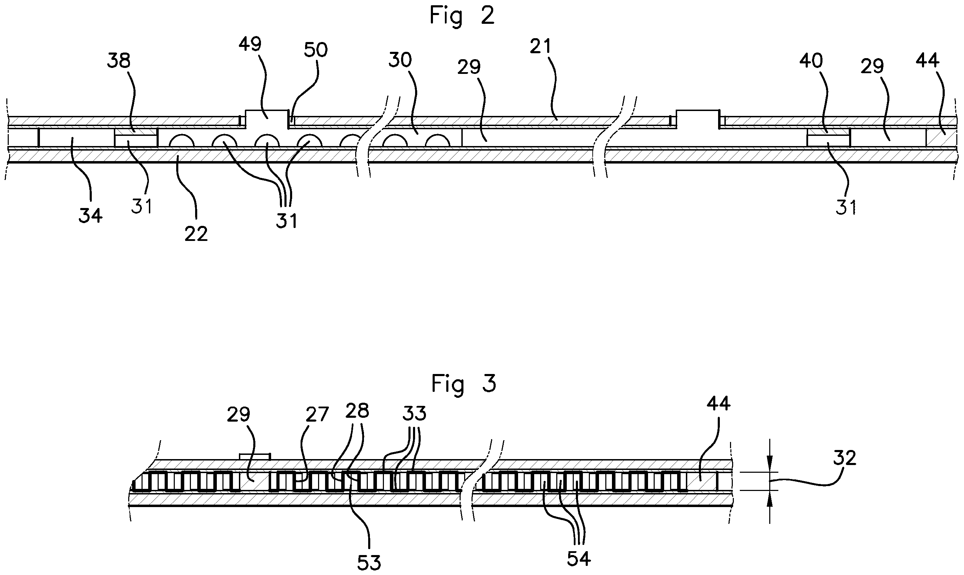

- la figure 2 est une représentation schématique d'un dispositif d'échange thermique conforme à la figure 1 par une coupe longitudinale II-II, avec une portion centrale arrachée, avant une étape de brasage et de cintrage,
- la figure 3 est une représentation schématique d'un dispositif d'échange thermique conforme aux figures 1 et 2 par une coupe transversale III-III, avec des portions intermédiaires arrachées, avant une étape de brasage et de cintrage,
- la figure 4 est une représentation schématique d'un dispositif d'échange thermique conforme aux figures 1, 2 et 3 en vue éclatée, sans les guide-flux afin de faciliter la lecture de la figure,
- la figure 5 est une représentation schématique d'un dispositif d'échange thermique conforme aux figures 1, 2, 3 et 4, en vue perspective sur la plaque externe, une fois assemblé, brasé et cintré.

Le dispositif d'échange thermique présenté est symétrique par rapport à un axe de symétrie centrale. Ainsi la rigidité en flexion est homogène au moins selon une direction perpendiculaire à une direction principale 48.

Le dispositif d'échange comprend une plaque interne 21 et une plaque externe 22. Ces plaques sont par exemple réalisées en alliage d'aluminium, en acier, en alliage de titane ou encore en alliage de nickel -notamment en superalliage de nickel tel que l'Inconel®. Dans l'exemple présenté, elles sont de préférence en alliage d'aluminium.

Entre ces deux plaques sont interposées plusieurs pièces intérieures, notamment des entretoises formant un cloisonnage d'une enceinte de circulation de fluide entre la plaque interne 21 et la plaque externe 22.

Le dispositif comprend notamment quatre parois périphériques 44 mises bout à bout à 90° les unes des autres de sorte à délimiter une enceinte entre la plaque interne et la plaque externe. La paroi périphérique 44 présente une épaisseur correspondant à la distance interpariétale 32 que l'on souhaite obtenir entre la surface intérieure de la plaque interne et la surface intérieure de la plaque externe. La paroi périphérique est choisie dans un matériau étanche au fluide caloporteur que le dispositif d'échange est destiné à accueillir.

Chaque tronçon de paroi périphérique 44 présente en outre une pluralité de bossages d'assemblage 47 d'épaisseur supérieure à la distance interpariétale 32. Lesdits bossages d'assemblage 47 sont disposés à l'extérieur de l'enceinte. La plaque externe 22 et une feuille de brasure 36 présentent des alésages adaptés pour pouvoir y introduire lesdits bossages d'assemblage 47 de la paroi périphérique de façon à la bloquer en translation dans le plan de ladite plaque extérieure entre le moment ou le dispositif est assemblé est le moment ou l'ensemble des pièces intérieures sont solidaires des plaques interne et/ou externe.

La plaque interne présente deux ouvertures débouchant dans l'enceinte, réparties symétriquement par rapport audit axe de symétrie du dispositif. L'une des ouvertures est une entrée 25 pour un fluide caloporteur, l'autre est une sortie 26 pour ledit fluide caloporteur.

L'entrée 25 de fluide est adaptée pour qu'une bouche d'alimentation 45 en fluide puisse y être connectée. La sortie 26 de fluide est adaptée pour qu'une bouche de collecte 46 de fluide puisse y être connectée.

L'enceinte de circulation de fluide est séparée en deux zones de circulation de fluide par une cloison étanche 29 au fluide caloporteur disposée selon l'axe de symétrie dudit dispositif et une cloison à claire-voie 30 disposée selon l'axe de symétrie dans le prolongement de la cloison étanche 29, lesdites cloisons étant droites. Ladite direction principale 48 est parallèle audit axe de symétrie. Lesdites cloisons étanche et à claire-voie s'étendent selon ladite direction principale.

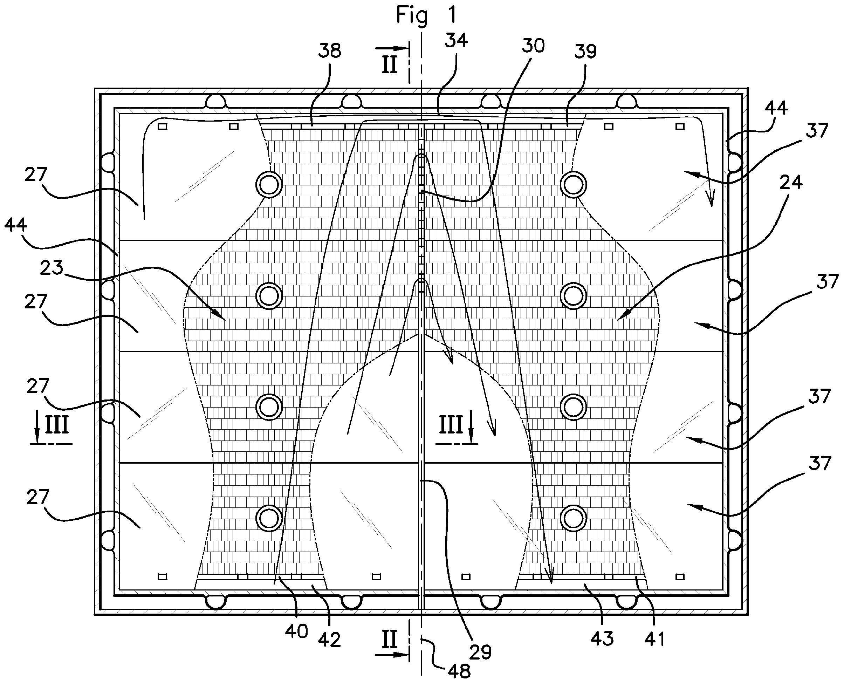

La cloison étanche 29 s'étend d'un premier bord de l'enceinte situé du côté de l'entrée 25 et de la sortie 26 jusque dans l'enceinte. Elle s'étend notamment au moins à partir de la paroi périphérique. Comme représenté en figure 1, elle s'étend en fait un peu au-delà de la paroi périphérique 44 à l'extérieur de l'enceinte.

La cloison à claire-voie 30 s'étend de l'extrémité de la cloison étanche se trouvant dans l'enceinte jusqu'à proximité -mais à une distance non-nulle laissée volontairement libre- d'un second bord de l'enceinte, opposé au premier bord à partir duquel la cloison étanche s'étend. La cloison à claire-voie s'arrête avant le second bord de sorte à laisser un canal, dit canal d'adduction entre ledit second bord formé par la paroi périphérique 44 et l'extrémité de la cloison à claire-voie.

En prolongeant la cloison étanche, la cloison à claire-voie assure une homogénéité de rigidité en flexion selon la direction principale.

La cloison à claire-voie présente une pluralité d'orifices en forme d'arches 31 réalisées traversantes entre la zone amont 23 et la zone aval 24. Dans le mode de réalisation particulier présenté à titre d'exemple, chaque arche 31 présente une section de passage d'environ 14 mm². La cloison à claire-voie présente une section totale de passage de fluide caloporteur d'environ 500 mm², adaptée pour qu'environ 80 % du fluide caloporteur passe à travers la cloison à claire-voie.

De part et d'autre de chaque arche 31, la cloison à claire-voie 30 présente des pieds d'arches au contact et solidarisés -par brasure- de la paroi externe. La portée de chaque arche est inférieure au double de la distance interpariétale 32. Dans l'exemple présenté, la distance interpariétale 32 est d'environ 3,6 mm tandis que la portée de chaque arche est d'environ 3mm. La cloison à claire-voie présente donc une épaisseur d'au moins 1mm sur toute sa longueur, conférant au dispositif une résistance mécanique importante.

À cet effet, la face de la cloison à claire-voie opposée à la face sur laquelle sont ouvertes les arches est en contact de surface et solidarisée -par brasure- à la plaque interne 21.

La cloison à claire-voie présente, sur cette face solidaire de la plaque interne, des bossage d'assemblage 49 introduits dans des alésages 50 de la plaque interne 21 et de la feuille de brasure 35, de façon à la bloquer en translation dans le plan de ladite plaque extérieure entre le moment ou le dispositif est assemblé et le moment ou l'ensemble des pièces intérieures sont solidarisées aux plaques interne et/ou externe.

La cloison à claire-voie peut être réalisée en une pièce ou par plusieurs éléments de cloison à claire-voie mis bout à bout. Dans l'exemple présenté, elle est réalisée à l'aide de deux éléments de cloison mis bout à bout. Cela permet de réaliser des économies d'échelle de production en utilisant lesdits éléments comme élément d'autres cloisons dudit dispositif : notamment les cloisons d'adduction 38, 39, la cloison de distribution 40 et la cloison de collecte 41 ci-après présentées.

En effet, le cloisonnage comprend une cloison, dite cloison d'adduction amont 38, s'étendant de la paroi à claire-voie à une paroi périphérique 44. La cloison d'adduction amont 38 sépare la zone amont 23 d'un canal, dit canal d'adduction 34 s'étendant sur toute la largeur du dispositif, à l'aval hydrauliquement de la zone amont et à l'amont hydrauliquement de la zone amont.

Ledit canal d'adduction 34 est exempt de paroi de guidage et de cloison de sorte à laisser un fluide caloporteur circuler librement sur toute sa longueur, notamment pour passer de la zone amont 23 vers la zone aval 24.

Dans le mode de réalisation particulier présenté à titre d'exemple, le canal d'adduction présente une largeur d'environ 16 mm, soit une section de passage du fluide d'environ 57,6 mm². La section de passage de fluide caloporteur du canal d'adduction est donc au moins 8 fois inférieure à la section totale de passage de fluide caloporteur de la cloison à claire-voie. Ainsi, seul 20 % maximum du fluide caloporteur passe de la zone amont 23 à la zone aval 24 à travers le canal d'adduction 34.

Pour permettre la circulation du fluide caloporteur entre la zone amont et le canal d'adduction, la cloison d'adduction amont 38 est avantageusement formée des mêmes éléments de cloison que la cloison à claire-voie, de sorte qu'elle présente des arches 31 traversantes entre la zone amont et le canal d'adduction 34.

De même, le cloisonnage comprend une cloison, dite cloison d'adduction aval 39, s'étendant de la paroi à claire-voie à une paroi périphérique 44, symétriquement à ladite cloison d'adduction amont 38 par rapport à la cloison à claire-voie. La cloison d'adduction aval 39 sépare ledit canal d'adduction 34 de la zone aval 24.

Pour permettre la circulation du fluide caloporteur entre le canal d'adduction et la zone aval, la cloison d'adduction aval 39 est avantageusement formée des mêmes éléments de cloison que la cloison à claire-voie, de sorte qu'elle présente des arches traversantes entre le canal d'adduction 34 et la zone aval 24.

Les cloisons d'adduction amont 38 et aval 39 sont mises bout à bout à angle droit avec une extrémité de la cloison à claire-voie 30, de sorte que la cloison à claire-voie ne forme pas une restriction de passage dans le canal d'adduction 34.

Le fluide caloporteur circule ainsi de la zone amont 23 vers la zone aval 24 soit à travers la cloison à claire-voie 30, soit à travers la cloison d'adduction amont 38 puis dans le canal d'adduction 34 puis à travers la cloison d'adduction aval 39.

Aucun chemin hydraulique n'est ainsi particulièrement privilégié par rapport à d'autres, de façon à assurer une bonne répartition du fluide caloporteur dans le dispositif d'échange thermique. En effet, le passage d'un fluide circulant, dans la zone amont et/ou dans la zone aval, à proximité de la paroi périphérique 44 est facilité par le canal d'adduction exempt de paroi. Dans un dispositif selon l'invention, la circulation de fluide caloporteur se fait donc aussi bien selon un chemin hydraulique court entre une entrée de fluide 25 et une sortie de fluide 26 que selon des chemins hydrauliques plus longs.

Les cloisons d'adduction amont 38 et aval 39 présentent chacune une section totale de passage de fluide caloporteur d'environ 750 mm².

Le cloisonnage comprend aussi une cloison de distribution 40 s'étendant de la cloison étanche 29 à une paroi périphérique 44. La cloison de distribution 40 sépare la zone amont 23 d'un canal, dit canal de distribution 42.

L'entrée 25 de fluide débouche dans ledit canal de distribution 42. Ledit canal de distribution 42 est exempt de paroi de guidage et de cloison de sorte à laisser un fluide caloporteur circuler librement sur toute sa longueur.

La cloison de distribution 40 est avantageusement formée des mêmes éléments de cloison que la cloison à claire-voie, de sorte qu'elle présente des arches 31 traversantes entre le canal de distribution et la zone amont. Le canal de distribution 42 permet ainsi d'assurer la distribution du fluide caloporteur dans toute la zone amont 23 à partir de son introduction dans l'enceinte par l'entrée 25.

De même, le cloisonnage comprend en outre une cloison de collecte 41 s'étendant de la cloison étanche 29 à une paroi périphérique 44, symétriquement à la cloison de distribution par rapport à la cloison étanche 29. La cloison de collecte 41 sépare la zone aval 24 d'un canal, dit canal de collecte 43.

Les cloisons de distribution et de collecte présentent chacune une section totale de passage du fluide caloporteur d'environ 750 mm².

La sortie 26 de fluide débouche dans ledit canal de collecte 43. Ledit canal de collecte 43 est exempt de paroi de guidage et de cloison de sorte à laisser un fluide caloporteur circuler librement sur toute sa longueur.

La cloison de collecte 41 est avantageusement formée des mêmes éléments de cloison que la cloison à claire-voie, de sorte qu'elle présente des arches traversantes entre la zone aval et le canal de collecte. Le canal de collecte 43 permet ainsi d'assurer la collecte du fluide caloporteur issu de toute la zone aval 24 pour pouvoir ensuite être extrait de l'enceinte via la sortie 26.

Quatre guide-flux 27 sont disposés dans la zone amont 23 et quatre guide-flux 27 sont disposés dans la zone aval 24. Ils sont disposés les uns à la suite des autres, dans le même sens.

Chaque guide-flux 27 présente des parois de guidage 28, 53 parallèles aux parois étanche 29 et à claire-voie 30, et formant une pluralité de canaux de guidage 54 de sorte à privilégier la circulation du fluide caloporteur globalement selon cette direction, tant dans la zone amont que dans la zone aval. Les guide-flux, par leur parois de guidage permettent de répartir le fluide dans toute la zone de circulation (amont et aval) afin d'optimiser l'échange thermique en évitant la formation d'un chemin hydraulique préférentiel pour le fluide caloporteur et ainsi minimiser les effets de bords de l'écoulement de fluide caloporteur dans l'enceinte.

Chaque guide-flux 27 est formé d'une pluralité de tronçons successifs présentant chacun un profil crénelé, de façon à former des parois de guidage 28, 53 et des zones de contact surfacique avec la plaque interne 21 et avec la plaque externe 22. Deux tronçons successifs sont décalés latéralement, de sorte que les parois de guidage 53 d'un tronçon situé directement en aval d'un autre tronçon sont décalées latéralement (selon une direction orthogonale aux parois étanche et à claire-voie) par rapport aux parois de guidage 28 de ce dernier.

De tels guide-flux 27 sont représentés en coupe à la figure 1 de façon grossie et partiellement en arraché afin de faciliter la lecture de la figure.

Le pas du profil crénelé de chaque tronçon de chaque guide-flux 27 est avantageusement d'environ 4mm, soit à peu près la même valeur que la distance interpariétale 32.

La longueur de chaque tronçon de chaque guide-flux 27 est d'environ 6mm, de sorte que le fluide caloporteur est légèrement mélangé tous les 6mm de son parcours dans un dispositif d'échange selon l'invention.

En outre, le dispositif comprend des moyens de fixation du dispositif d'échange thermique sur un panneau de support d'une carrosserie de véhicule (notamment de fuselage d'aéronef) adaptés pour permettre une répartition des contraintes mécaniques subies par le dispositif d'échange thermique sur le panneau de support.

À ce titre, le dispositif comprend notamment des oeillets 52 de fixation traversant l'enceinte du dispositif dans le sens de son épaisseur, de façon étanche, et adaptés pour pouvoir coopérer avec des pièces de fixation (par exemple des vis ou des rivets) audit panneau de support. Le dispositif présenté comprend quatre oeillets 52 de fixation dans la zone amont 23 et quatre oeillets 52 de fixation dans la zone aval 24.

Chaque oeillet 52 de fixation est monté au milieu d'un guide-flux 27, de sorte à l'immobiliser en translation entre l'assemblage et le brasage du dispositif.

Chaque oeillet 52 de fixation présente des épaulements opposés de façon à maintenir la plaque externe à la distance interpariétale 32 de la plaque interne. Lesdits épaulements sont avantageusement brasés sur les surfaces intérieures de la plaque interne et de la plaque externe, de sorte à améliorer la résistance mécanique du dispositif. Les oeillets peuvent être montés dans des logements 51 de la plaque interne 21.

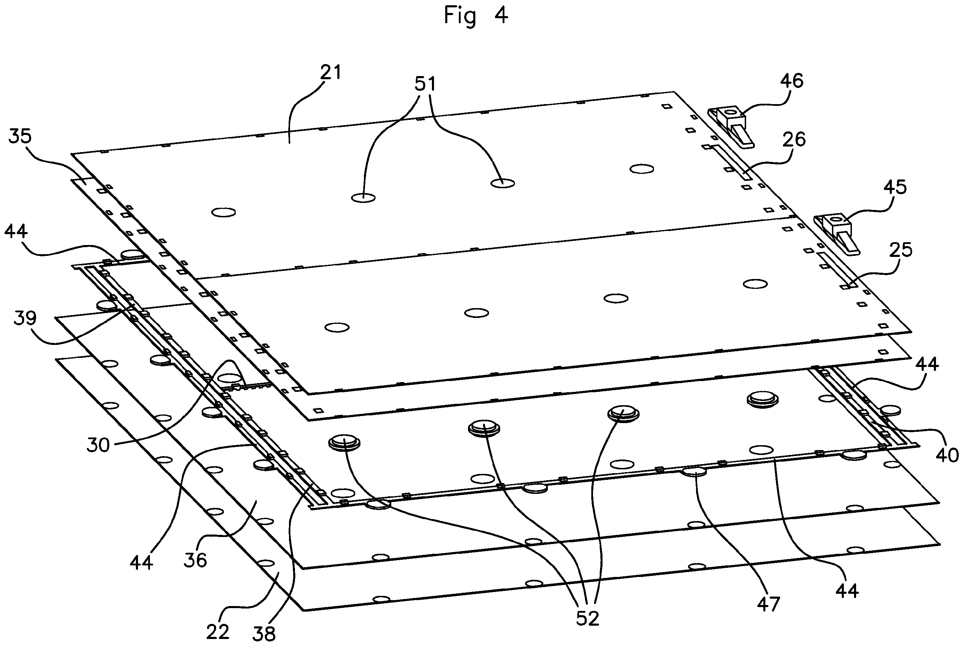

Conformément à l'invention, un dispositif selon l'invention tel que représenté en figure 4 est assemblé dans une première étape, puis dans une deuxième étape, il est simultanément cintré et chauffé à une température adaptée au brasage. La température est choisie supérieure à la température de fusion des feuilles 35, 36 de brasure et inférieure aux températures de fusion des autres éléments du dispositif.

Une telle méthode permet d'obtenir un dispositif d'échange thermique conforme à l'invention, cintré pour pouvoir être intégré sur une carrosserie de véhicule sans impacter sa traînée, et sans déformation plastique des pièces le constituant, notamment sans déformation plastique des pièces brasées sur les surfaces intérieures de la plaque interne et de la plaque externe.

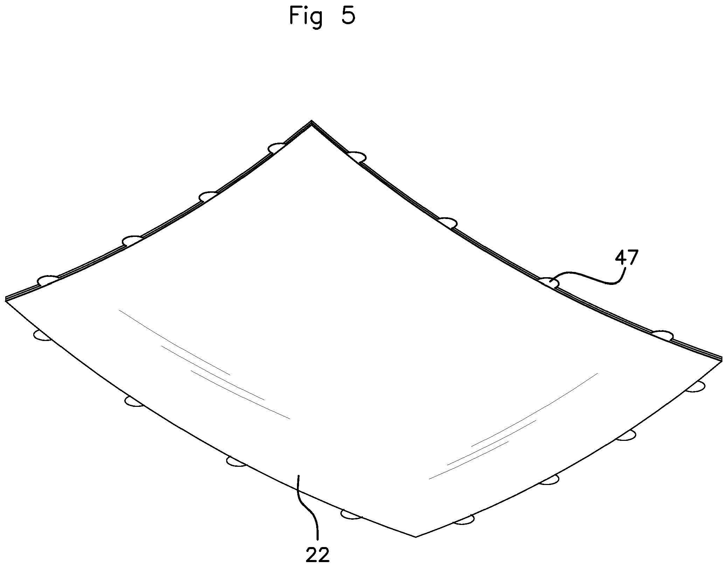

Un tel dispositif est représenté en figure 5. Il est cintré selon au moins deux directions : autour d'un axe parallèle à la direction principale 48 et autour d'un axe orthogonal à la direction principale 48. Il est cintré de telle sorte que la plaque externe 22 présente une surface extérieure (destinée à être au contact d'un milieu extérieur à un véhicule) de forme convexe, et que la plaque interne 21 présente une surface extérieure concave (non visible sur la vue représentée en figure 5).

L'invention peut faire l'objet de nombreuses autres variantes de réalisation non représentées.

Rien n'empêche que chaque zone de circulation (amont et aval) accueille un unique guide-flux, en une seule pièce, de façon à faciliter l'assemblage d'un dispositif selon l'invention.

Les orifices de circulation ne prennent pas nécessairement la forme d'arches et peuvent par exemple être des percements, une première face de la cloison à claire-voie étant alors entièrement en contact avec une première des plaques interne ou externe et une deuxième face, opposée à la première face, de la cloison à claire-voie étant entièrement en contact avec la seconde des plaques interne ou externe.

L'étanchéité à la périphérie de l'enceinte peut aussi être réalisée par soudure ou par brasage des plaques interne et externe l'une sur l'autre, par assemblage avec ou sans joint périphérique interposé entre les deux plaques, etc...

## Revendications

1. Dispositif d'échange thermique cintré comprenant :
- une première plaque, dite plaque externe (22), thermo-conductrice,
- une deuxième plaque, dite plaque interne (21),
- une enceinte de circulation d'un fluide caloporteur s'étendant entre la plaque externe (22) et la plaque interne (21),
- un cloisonnage séparant l'enceinte en une pluralité de zones de circulation de fluide caloporteur se jouxtant, y compris au moins une première zone, dite zone amont (23), et une deuxième zone, dite zone aval (24), située en aval de ladite zone amont,
- au moins une entrée (25) de fluide caloporteur dans l'enceinte, disposée en amont de la zone amont (23),
- au moins une sortie (26) de fluide caloporteur hors de l'enceinte, disposée en aval de la zone aval (24),
- au moins un guide-flux, dit guide amont (27), disposé dans ladite zone amont (23),
- au moins un guide-flux, dit guide aval (37), disposé dans ladite zone aval,
◆ chaque guide-flux présentant une pluralité de parois de guidage disposées de façon à guider ledit fluide caloporteur globalement selon ladite direction principale,
◆ ledit cloisonnage comprenant au moins une première cloison, dite cloison étanche (29) :
• étanche au fluide caloporteur,
• s'étendant selon une direction, dite direction principale (48), entre une portion amont de la zone amont (23) et une portion aval de la zone aval (24) de façon à séparer ces portions de façon étanche,
• de longueur inférieure à ladite zone amont et à ladite zone aval, de façon à laisser un passage, dit passage de retour, de fluide caloporteur d'une portion aval de la zone amont vers une portion amont de la zone aval globalement selon une direction orthogonale à ladite direction principale (48),
• solidaire mécaniquement de la plaque interne (21) et de la plaque externe (22) de façon à pouvoir assurer un maintien de la plaque externe par rapport à la plaque interne,
- **caractérisé en ce que** ledit cloisonnage comprend en outre : au moins une deuxième cloison, dite cloison à claire-voie (30),
• disposée dans ledit passage de retour et s'étendant selon la direction principale (48) dans le prolongement de ladite cloison étanche,
• présentant au moins un orifice (31) de circulation de fluide caloporteur entre ladite zone amont (23) et ladite zone aval (24),
• solidaire mécaniquement de la plaque interne (21) et de la plaque externe (22) de façon à pouvoir assurer un maintien de la plaque externe par rapport à la plaque interne, et
- des cloisons d'adduction (38, 39) séparant la zone amont (23) et la zone aval (24) d'une troisième zone de l'enceinte formant un canal, dit canal d'adduction (34), de circulation de fluide caloporteur entre la zone amont et la zone aval.

2. Dispositif selon la revendication 1, **caractérisé en ce que** toute section transversale de la cloison à claire-voie présente au moins une surface solidaire mécaniquement avec l'une des plaques externe ou interne.

3. Dispositif selon l'une des revendications 1 ou 2, **caractérisé en ce que** la cloison à claire-voie (30) présente au moins un orifice (31) de circulation de fluide caloporteur en forme d'arche, dite arche de circulation.

4. Dispositif selon la revendication 3, **caractérisé en ce que** la plaque interne (21) étant à une distance, dite distance interpariétale (32), de la plaque externe (22), la portée de chaque arche de circulation (31) est inférieure au triple de la distance interpariétale.

5. Dispositif selon l'une des revendications 1 à 4, **caractérisé en ce que** chaque guide-flux (27, 37) présente des contacts surfaciques (33) avec la plaque interne (21) et avec la plaque externe (22) au niveau desquels lesdits guide-flux sont solidaires mécaniquement de la plaque interne et de la plaque externe.

6. Dispositif selon l'une des revendications 1 à 5, **caractérisé en ce que** chaque paroi (28) de guidage de chaque guide-flux (27, 37) présente une longueur inférieure à la longueur totale dudit guide-flux.

7. Dispositif selon l'une des revendications 1 à 6, **caractérisé en ce que** :
- ladite zone amont (23) comprend au moins un guide amont (27) s'étendant au moins en partie en regard d'au moins un orifice (31) de circulation d'une cloison à claire-voie (30) séparant la zone amont de la zone aval,
- ladite zone aval (24) comprend au moins un guide aval (37) s'étendant au moins en partie en regard d'au moins un orifice (31) de circulation d'une cloison à claire-voie (30) séparant la zone amont de la zone aval.

8. Dispositif selon l'une des revendications 1 à 7, **caractérisé en ce que** la largeur dudit canal d'adduction est avantageusement 10 fois inférieure à sa longueur.

9. Dispositif selon l'une des revendications 1 à 8, **caractérisé en ce qu'**il est cintré autour de plusieurs axes distincts.

10. Procédé de fabrication d'un dispositif d'échange thermique selon l'une des revendications 1 à 9 dans lequel :
- une première plaque, dite plaque externe (22), thermo-conductrice, est disposée en regard d'une deuxième plaque, dite plaque interne (21), de façon à former une enceinte de circulation d'un fluide caloporteur s'étendant entre la plaque externe (22) et la plaque interne (21),
- un cloisonnage (29, 30, 38, 39, 40, 41, 44) est disposé dans l'enceinte pour séparer l'enceinte au moins entre une première zone, dite zone amont (23), de circulation de fluide caloporteur et une deuxième zone, dite zone aval (24), de circulation de fluide caloporteur,
- au moins une entrée (25) de fluide est réalisée pour pouvoir injecter le fluide caloporteur dans l'enceinte, en amont de la zone amont (23),
- au moins une sortie (26) de fluide est réalisée pour pouvoir extraire le fluide caloporteur hors de l'enceinte, en aval de la zone aval (24),
- au moins un guide-flux, dit guide amont (27), est disposé dans ladite zone amont (23), chaque guide amont (27) présentant une pluralité de parois (28) de guidage du fluide caloporteur parallèles les unes aux autres de façon à guider ledit fluide caloporteur globalement selon une direction, dite direction principale,
- au moins un guide-flux, dit guide aval (37), est disposé dans ladite zone aval, ledit guide aval (37) présentant une pluralité de parois de guidage du fluide caloporteur parallèles les unes aux autres, et disposées de façon à guider ledit fluide caloporteur globalement selon ladite direction principale,
- au moins une première cloison, dite cloison étanche (29), dudit cloisonnage, choisie étanche au fluide caloporteur est disposée selon une direction, dite direction principale (48), au moins entre une portion amont de la zone amont (23) et une portion aval de la zone aval (24) de façon à séparer ces portions de façon étanche, tout en laissant un passage, dit passage de retour, de fluide caloporteur d'une portion aval de la zone amont vers une portion amont de la zone aval globalement selon une direction orthogonale à ladite direction principale, ladite cloison étanche étant solidaire mécaniquement de la plaque interne (21) et de la plaque externe (22) de façon à pouvoir assurer un maintien de la plaque externe par rapport à la plaque interne,
- ledit dispositif d'échange thermique subit une étape de cintrage, **caractérisé en ce que** :
- au moins une deuxième cloison, dite cloison à claire-voie (30), dudit cloisonnage, choisie présentant au moins un orifice (31) est disposée dans ledit passage de retour entre la zone amont et la zone aval, dans le prolongement de ladite cloison étanche de sorte que chaque orifice (31) permet une circulation de fluide caloporteur entre ladite zone amont (23) et ladite zone aval (24), ladite cloison à claire-voie étant solidaire mécaniquement de la plaque interne (21) et de la plaque externe (22) de façon à pouvoir assurer un maintien de la plaque externe par rapport à la plaque interne,
- ledit cloisonnage comprend en outre des cloisons d'adduction (38, 39) séparant la zone amont (23) et la zone aval (24) d'une troisième zone de l'enceinte forme un canal, dit canal d'adduction (34), de circulation de fluide caloporteur entre la zone amont et la zone aval.

11. Procédé selon la revendication 10, **caractérisé en ce que** :
- une feuille (35) de brasure est interposée entre la plaque interne (21) d'une part et le cloisonnage (29, 30, 38, 39, 40, 41, 44) et les guide-flux (27, 37) d'autre part,
- une feuille (36) de brasure est interposée entre la plaque externe (22) d'une part et le cloisonnage (29, 30, 38, 39, 40, 41, 44) et les guide-flux (27, 37) d'autre part,
- une fois assemblé, ledit dispositif d'échange thermique subit simultanément un chauffage de brasage et un cintrage.

## Patentansprüche

1. Gebogene Wärmetauschvorrichtung, umfassend:
- eine erste, als äußere Platte (22) bezeichnete wärmeleitende Platte,
- eine zweite, als innere Platte (21) bezeichnete Platte,
- ein Zirkulationsgefäß eines Wärmeträgerfluids, das sich zwischen der äußeren Platte (22) und der inneren Platte (21) erstreckt,
- eine Trennwandung, die das Gefäß in eine Vielzahl von aneinandergrenzende Wärmeträgerfluid-Zirkulationsbereiche trennt, darunter mindestens ein erster, als stromaufwärtiger Bereich (23) bezeichneter Bereich, und ein zweiter, als stromabwärtiger Bereich (24) bezeichneter Bereich, der stromabwärts des stromaufwärtigen Bereichs liegt,
- mindestens einen Wärmeträgerfluid-Einlass (25) in das Gefäß hinein, der stromaufwärts des stromaufwärtigen Bereichs (23) angeordnet ist,
- mindestens einen Wärmeträgerfluid-Auslass (26) aus dem Gefäß heraus, der stromabwärts des stromabwärtigen Bereichs (24) angeordnet ist,
- mindestens einen als stromaufwärtigen Lenker (27) bezeichneten Strömungslenker, der im stromaufwärtigen Bereich (23) angeordnet ist,
- mindestens einen als stromabwärtigen Lenker (37) bezeichneten Strömungslenker, der im stromabwärtigen Bereich angeordnet ist,
◆ wobei jeder Strömungslenker eine Vielzahl von Lenkwänden aufweist, die derart angeordnet sind, dass sie das Wärmeträgerfluid im Allgemeinen gemäß der Hauptrichtung lenken,
◆ wobei die Trennwandung mindestens eine erste, als dichte Trennwand (29) bezeichnete Trennwand umfasst:
• die gegenüber dem Wärmeträgerfluid dicht ist,
• die sich gemäß einer als Hauptrichtung (48) bezeichneten Richtung zwischen einem stromaufwärtigen Abschnitt des stromaufwärtigen Bereichs (23) und einem stromabwärtigen Abschnitt des stromabwärtigen Bereichs (24) derart erstreckt, dass sie diese Abschnitte in dichter Weise trennt,
• die von kleinerer Länge als der stromaufwärtige Bereich und als der stromabwärtige Bereich ist, derart, dass sie einen als Rücklaufdurchlass bezeichneten Wärmeträgerfluiddurchlass von einem stromabwärtigen Abschnitt des stromaufwärtigen Bereichs zu einem stromaufwärtigen Abschnitt des stromabwärtigen Bereichs im Allgemeinen gemäß einer Richtung lässt, die zur Hauptrichtung (48) orthogonal ist,
• die mechanisch fest mit der inneren Platte (21) und mit der äußeren Platte (22) verbunden ist, derart, dass sie einen Halt der äußeren Platte in Bezug auf die innere Platte sicherstellen kann,
- **dadurch gekennzeichnet, dass** die Trennwandung weiter umfasst: mindestens eine als durchlässige Trennwand (30) bezeichnete zweite Trennwand,
• die in dem Rücklaufdurchlass angeordnet ist und sich gemäß der Hauptrichtung (48) in der Verlängerung der dichten Trennwand erstreckt,
• die mindestens eine Wärmeträgerfluid-Zirkulationsöffnung (31) zwischen dem stromaufwärtigen Bereich (23) und dem stromabwärtigen Bereich (24) aufweist,
• die mechanisch fest mit der inneren Platte (21) und mit der äußeren Platte (22) verbunden ist, derart, dass sie einen Halt der äußeren Platte in Bezug auf die innere Platte sicherstellen kann, und
- Adduktionstrennwände (38, 39), die den stromaufwärtigen Bereich (23) und den stromabwärtigen Bereich (24) von einem dritten Bereich des Gefäßes trennen, der einen als Adduktionskanal (34) bezeichneten Wärmeträgerfluid-Zirkulationskanal zwischen dem stromaufwärtigen Bereich und dem stromabwärtigen Bereich bildet.

2. Vorrichtung gemäß Anspruch 1, **dadurch gekennzeichnet, dass** jeder Querschnitt der durchlässigen Trennwand mindestens eine Fläche aufweist, die mechanisch fest mit einer aus der äußeren oder inneren Platte verbunden ist.

3. Vorrichtung gemäß einem der Ansprüche 1 oder 2, **dadurch gekennzeichnet, dass** die durchlässige Trennwand (30) mindestens eine als Zirkulationsbogen bezeichnete bogenförmige Wärmeträgerfluid-Zirkulationsöffnung (31) umfasst.

4. Vorrichtung gemäß Anspruch 3, **dadurch gekennzeichnet, dass** sich die innere Platte (21) in einem als interparietaler Abstand (32) bezeichneten Abstand von der äußeren Platte (22) befindet, wobei die Reichweite von jedem Zirkulationsbogen (31) kleiner als das Dreifache des interparietalen Abstands ist.

5. Vorrichtung gemäß einem der Ansprüche 1 bis 4, **dadurch gekennzeichnet, dass** jeder Strömungslenker (27, 37) flächige Kontakte (33) mit der inneren Platte (21) und mit der äußeren Platte (22) aufweist, in deren Gegend die Strömungslenker mechanisch fest mit der inneren Platte und mit der äußeren Platte verbunden sind.

6. Vorrichtung gemäß einem der Ansprüche 1 bis 5, **dadurch gekennzeichnet, dass** jede Lenkwand (28) jedes Strömungslenkers (27, 37) eine Länge aufweist, die kleiner als die Gesamtlänge des Strömungslenkers ist.

7. Vorrichtung gemäß einem der Ansprüche 1 bis 6, **dadurch gekennzeichnet, dass**:
- der stromaufwärtige Bereich (23) mindestens einen stromaufwärtigen Lenker (27) umfasst, der sich mindestens zum Teil gegenüber mindestens einer Zirkulationsöffnung (31) einer durchlässigen Trennwand (30) erstreckt, die den stromaufwärtigen Bereich vom stromabwärtigen Bereich trennt,
- der stromabwärtige Bereich (24) mindestens einen stromabwärtigen Lenker (37) umfasst, der sich mindestens zum Teil gegenüber mindestens einer Zirkulationsöffnung (31) einer durchlässigen Trennwand (30) erstreckt, die den stromaufwärtigen Bereich vom stromabwärtigen Bereich trennt.

8. Vorrichtung gemäß einem der Ansprüche 1 bis 7, **dadurch gekennzeichnet, dass** die Breite des Adduktionskanals vorteilhafterweise 10-mal kleiner als seine Länge ist.

9. Vorrichtung gemäß einem der Ansprüche 1 bis 8, **dadurch gekennzeichnet, dass** sie um mehrere verschiedene Achsen gebogen ist.

10. Verfahren zur Herstellung einer Wärmetauschvorrichtung gemäß einem der Ansprüche 1 bis 9, wobei:
- eine erste, als äußere Platte (22) bezeichnete wärmeleitende Platte gegenüber einer zweiten, als innere Platte (21) bezeichneten Platte derart angeordnet wird, dass ein Zirkulationsgefäß eines Wärmeträgerfluids gebildet wird, das sich zwischen der äußeren Platte (22) und der inneren Platte (21) erstreckt,
- eine Trennwandung (29, 30, 38, 39, 40, 41, 44) in dem Gefäß angeordnet wird, um das Gefäß mindestens zwischen einem ersten, als stromaufwärtigen Bereich (23) bezeichneten Wärmeträgerfluid-Zirkulationsbereich, und einem zweiten, als stromabwärtigen Bereich (24) bezeichneten Wärmeträgerfluid-Zirkulationsbereich zu trennen,
- mindestens ein Fluid-Einlass (25) ausgeführt wird, um das Wärmeträgerfluid stromaufwärts des stromaufwärtigen Bereichs (23) in das Gefäß einspritzen zu können,
- mindestens ein Fluid-Auslass (26) ausgeführt wird, um das Wärmeträgerfluid stromabwärts des stromabwärtigen Bereichs (24) aus dem Gefäß heraus abziehen zu können,
- mindestens ein als stromaufwärtiger Lenker (27) bezeichneter Strömungslenker im stromaufwärtigen Bereich (23) angeordnet wird, wobei jeder stromaufwärtige Lenker (27) eine Vielzahl von Wänden (28) zum Lenken des Wärmeträgerfluids aufweist, die zueinander parallel sind, derart, dass sie das Wärmeträgerfluid im Allgemeinen gemäß einer als Hauptrichtung bezeichneten Richtung lenken,
- mindestens ein als stromabwärtiger Lenker (37) bezeichneter Strömungslenker im stromabwärtigen Bereich angeordnet wird, wobei der stromabwärtige Lenker (37) eine Vielzahl von Wänden zum Lenken des Wärmeträgerfluids aufweist, die zueinander parallel und derart angeordnet sind, dass sie das Wärmeträgerfluid im Allgemeinen gemäß der Hauptrichtung lenken,
- mindestens eine erste, als dichte Trennwand (29) bezeichnete Trennwand der Trennwandung, die so ausgewählt ist, dass sie gegenüber dem Wärmeträgerfluid dicht ist, gemäß einer als Hauptrichtung (48) bezeichneten Richtung mindestens zwischen einem stromaufwärtigen Abschnitt des stromaufwärtigen Bereichs (23) und einem stromabwärtigen Abschnitt des stromabwärtigen Bereichs (24) derart angeordnet wird, dass sie diese Abschnitte in dichter Weise trennt, wobei sie gleichzeitig einen als Rücklaufdurchlass bezeichneten Wärmeträgerfluiddurchlass von einem stromabwärtigen Abschnitt des stromaufwärtigen Bereichs zu einem stromaufwärtigen Abschnitt des stromabwärtigen Bereichs im Allgemeinen gemäß einer Richtung lässt, die zur Hauptrichtung orthogonal ist, wobei die dichte Trennwand mechanisch fest mit der inneren Platte (21) und mit der äußeren Platte (22) verbunden ist, derart, dass sie einen Halt der äußeren Platte in Bezug auf die innere Platte sicherstellen kann,
- die Wärmetauschvorrichtung einem Biegeschritt unterzogen wird, **dadurch gekennzeichnet, dass**:
- mindestens eine als durchlässige Trennwand (30) bezeichnete zweite Trennwand der Trennwandung, die so ausgewählt ist, dass sie mindestens eine Öffnung (31) aufweist, in dem Rücklaufdurchlass zwischen dem stromaufwärtigen Bereich und dem stromabwärtigen Bereich in der Verlängerung der dichten Trennwand derart angeordnet wird, dass jede Öffnung (31) ein Zirkulieren von Wärmeträgerfluid zwischen dem stromaufwärtigen Bereich (23) und dem stromabwärtigen Bereich (24) ermöglicht, wobei die durchlässige Trennwand mechanisch fest mit der inneren Platte (21) und mit der äußeren Platte (22) verbunden ist, derart, dass sie einen Halt der äußeren Platte in Bezug auf die innere Platte sicherstellen kann,
- die Trennwandung weiter Adduktionstrennwände (38, 39), umfasst, die den stromaufwärtigen Bereich (23) und den stromabwärtigen Bereich (24) von einem dritten Bereich des Gefäßes trennen, der einen als Adduktionskanal (34) bezeichneten Wärmeträgerfluid-Zirkulationskanal zwischen dem stromaufwärtigen Bereich und dem stromabwärtigen Bereich bildet.

11. Verfahren gemäß Anspruch 10, **dadurch gekennzeichnet, dass**:
- eine Lotfolie (35) zwischen einerseits der inneren Platte (21) und andererseits der Trennwandung (29, 30, 38, 39, 40, 41, 44) und den Strömungslenkern (27, 37) eingefügt wird,
- eine Lotfolie (36) zwischen einerseits der äußeren Platte (22) und andererseits der Trennwandung (29, 30, 38, 39, 40, 41, 44) und den Strömungslenkern (27, 37) eingefügt wird,
- die Wärmetauschvorrichtung, nachdem sie zusammengebaut wurde, gleichzeitig einer Erhitzung zum Löten und einem Biegen unterzogen wird.

## Claims

1. Bent heat exchange device comprising:
- a heat-conducting first plate, referred to as the outer plate (22),
- a second plate, referred to as the inner plate (21),
- a chamber for the flow of a heat transfer fluid extending between the outer plate (22) and the inner plate (21),
- a partition separating the chamber into a plurality of areas of flow of a heat transfer fluid converging, including at least one first area, referred to as upstream area (23), and a second area, referred to as downstream area (24), located downstream from said upstream area,
- at least one heat transfer fluid inlet (25) in the chamber, arranged upstream from the upstream area (23),
- at least one heat transfer fluid outlet (26) outside of the chamber, arranged downstream from the downstream area (24),
- at least one flow guide, referred to as upstream guide (27), arranged in said upstream area (23),
- at least one flow guide, referred to as the downstream guide (37), arranged in said downstream area,
◆ with each flow guide having a plurality of guide walls arranged in such a way as to guide said heat transfer fluid globally along said main direction,
◆ said partition comprising at least one first partition, referred to as the sealed partition (29):
• sealed from the heat transfer fluid,
• extending along a direction, referred to as the main direction (48), between a portion upstream from the upstream area (23) and a portion downstream from the downstream area (24) in such a way as to separate these portions in a sealed manner,
• of a length shorter than said upstream area and than said downstream area, in such a way as to leave a passage, referred to as the return passage, of the heat transfer fluid from a portion downstream from the upstream area to a portion upstream from the downstream area globally along a direction orthogonal to said main direction (48),
• mechanically secured to the inner plate (21) and the outer plate (22) in such a way as to be able to ensure a maintaining of the outer plate with respect to the inner plate,
- **characterised in that** said partition further comprises: at least one second partition, referred to as the slatted partition (30),
• arranged in said return passage and extending along the main direction (48) in the extension of said sealed partition,
• having at least one opening (31) for the flow of heat transfer liquid between said upstream area (23) and said downstream area (24),
• mechanically secured to the inner plate (21) and to the outer plate (22) in such a way as to be able to ensure a maintaining of the outer plate with respect to the inner plate, and
- adduction partitions (38, 39) separating the upstream area (23) and the downstream area (24) from a third area of the chamber forming a channel, referred to as the adduction channel (34), of the flow of a heat transfer fluid between the upstream area and the downstream area.

2. Device according to claim 1, **characterised in that** any cross section of the slatted partition has at least one surface mechanically secured with one of the outer or inner plates.

3. Device according to one of claims 1 or 2, **characterised in that** the slatted partition (30) has at least one opening (31) for the flow of heat transfer fluid in the shape of an arch, referred to as the flow arch.

4. Device according to claim 3, **characterised in that** the inner plate (21) being at a distance, referred to as interparietal distance (32), from the outer plate (22), the scope of each flow arch (31) is less than triple the interparietal distance.

5. Device according to one of claims 1 to 4, **characterised in that** each flow guide (27, 37) has surface contacts (33) with the inner plate (21) and with the outer plate (22) on which said flow guides are mechanically secured to the inner plate and to the outer plate.

6. Device according to one of claims 1 to 5, **characterised in that** each wall (28) for guiding of each flow guide (27, 37) has a length less than the entire length of said flow guide.

7. Device according to one of claims 1 to 6, **characterised in that**:
- said upstream area (23) comprises at least one upstream guide (27) extending at least partially facing at least one opening (31) for the flow of a slatted partition (30) separating the upstream area from the downstream area,
- said downstream area (24) comprises at least one downstream guide (37) extending at least partially facing at least one opening (31) for the flow of a slatted partition (30) separating the upstream area from the downstream area.

8. Device according to one of claims 1 to 7, **characterised in that** the width of said adduction channel is advantageously 10 times less than the length thereof.

9. Device according to one of claims 1 to 8, **characterised in that** it is bent around several separate axes.

10. Method for manufacturing a heat exchange device according to one of claims 1 to 9 wherein:
- a heat-conducting first plate, referred to as the outer plate (22), is arranged facing a second plate, referred to as the inner plate (21), in such a way as to form a chamber for the flow of a heat transfer fluid extending between the outer plate (22) and the inner plate (21),
- a partitioning (29, 30, 38, 39, 40, 41, 44) is arranged in the chamber in order to separate the chamber at least between a first area, referred to as upstream area (23), for the flow of a heat transfer fluid and a second area, referred to as downstream area (24), of the flow of a heat transfer fluid,
- at least one fluid inlet (25) is carried out in order to be able to inject the heat transfer fluid into the chamber, upstream from the upstream area (23),
- at least one fluid outlet (26) is carried out in order to be able to extract the heat transfer fluid outside of the chamber, downstream from the downstream area (24),
- at least one flow guide, referred to as the upstream guide (27), is arranged in said upstream area (23), with each upstream guide (27) having a plurality of walls (28) for guiding the heat transfer fluid parallel to one another in such a way as to guide said heat transfer fluid globally along a direction, referred to as main direction,
- at least one flow guide, referred to as the downstream guide (37), is arranged in said downstream area, said downstream guide (37) having a plurality of guide walls of the heat transfer fluid parallel to one another, and arranged in such a way as to guide said heat transfer fluid globally along said main direction,
- at least one first partition, referred to as the sealed partition (29), of said partitioning, chosen sealed from the heat transfer fluid is arranged along a direction, referred to as main direction (48), at least between a portion upstream from the upstream area (23) and a portion downstream from the downstream area (24) in such a way as to separate these portions in a sealed manner, while leaving a passage, referred to as the return passage, of the heat transfer fluid from a portion downstream from the upstream area to a portion upstream from the downstream area globally along a direction orthogonal to said main direction, said sealed partition being mechanically secured to the inner plate (21) and to the outer plate (22) in such a way as to be able to ensure a maintaining of the outer plate with respect to the inner plate,
- said heat exchange device undergoes a step of bending, **characterised in that**:
- at least one second partition, referred to as the slatted partition (30), of said partitioning, chosen having at least one opening (31) is arranged in said return passage between the upstream area and the downstream area, in the extension of said sealed partition in such a way that each opening (31) allows for the flow of a heat transfer fluid between said upstream area (23) and said downstream area (24), said slatted partition being mechanically secured to the inner plate (21) and to the outer plate (22) in such a way as to be able to ensure a maintaining of the outer plate with respect to the inner plate,
- said partition further comprises adduction partitions (38, 39) separating the upstream area (23) and the downstream area (24) from a third area of the chamber forming a channel, referred to as adduction channel (34), for the flow of heat transfer fluid between the upstream area and the downstream area.

11. Method according to claim 10, **characterised in that**:
- a brazing sheet (35) is inserted between the inner plate (21) on the one hand and the partitioning (29, 30, 38, 39, 40, 41, 44) and the flow guides (27, 37) on the other hand,
- a brazing sheet (36) is inserted between the outer plate (22) on the one hand and the partitioning (29, 30, 38, 39, 40, 41, 44) and the flow guides (27, 37) on the other hand,
- once assembled, said heat exchange device simultaneously undergoes a brazing heating and a bending.
